# EUROPÄISCHE PATENTANMELDUNG

(11) **EP 3 269 693 A1**
(43) Veröffentlichungstag der Anmeldung: **17.01.2018**
(21) Anmeldenummer: 16179108.2
(22) Anmeldetag: 12.07.2016
(51) Int. Cl.: C04B 28/08, E21D 11/04

(54) **MEHR-KOMPONENTEN-BAUSTOFFMISCHUNG**

(71) Anmelder: MC-Bauchemie Müller GmbH & Co. KG Chemische Fabriken, 46238 Bottrop (DE); Porr Bau GmbH, 1100 Wien (AT)
(72) Erfinder: KLEEN, Eugen, 46514 Schermbeck (DE); HÖRLEIN, Norbert, 1220 Wien (AT)
(74) Vertreter: Zenz Patentanwälte Partnerschaft mbB

(57) **Zusammenfassung**

Die Erfindung betrifft eine Mehr-Komponenten-Baustoffmischung zum Herstellen eines Mörtels zum Verfüllen eines an einen Calciumsulfat-Anhydrit enthaltenden Baugrund angrenzenden Hohlraums, ein Verfahren zum Herstellen eines entsprechenden Mörtels, den Mörtel als solchen und seine Verwendung. Bekannte Baustoffmischungen sind für Calciumsulfat-Anhydrit-haltige Baugründe aufgrund des Quellens des Calciumsulfat-Anhydrits nicht geeignet. Die erfindungsgemäße Mehr-Komponenten-Baustoffmischung umfasst eine zementklinker-freie Grundkomponente (GK) mit einem latent-hydraulischen Bindemittel und zumindest einem Zuschlagstoff, eine Aktivatorkomponente (AK) mit zumindest einem alkalischen und/oder sulfatischen Aktivator zum Aktivieren des latent-hydraulischen Bindemittels, und eine Salzkomponente (SK) zumindest eines Salzes, dessen Anionen mit Calciumkationen ein Löslichkeitsprodukt bilden, das kleiner als 10⁻⁸ ist.

Aufgrund des geringes Löslichkeitsproduktes der Calcium/Anion-Verbindung geht das Calciumsulfat-Anhydrit des Baugrundes bei Kontakt mit einem Mörtel auf der Basis der Baustoffmischung nicht in Lösung bzw. quillt nicht auf, das entstehen eines größeren Quelldruckes kann wirkungsvoll vermieden werden.

## Beschreibung

Die Erfindung betrifft eine Mehr-Komponenten-Baustoffmischung zum Herstellen eines Mörtels zum Verfüllen eines an einen Calciumsulfat-Anhydrit enthaltenden Baugrund angrenzenden Hohlraums, ein Verfahren zum Herstellen eines entsprechenden Mörtels, den Mörtel als solchen und seine Verwendung.

Mehr-Komponenten-Baustoffmischungen werden beispielsweise zum Verfüllen eines als Ringspalt ausgebildeten Hohlraums zwischen der Außenfläche von Tübbingringen und einem Baugrund eines Tunnelbauwerks eingesetzt. Die Baustoffmischung wird bei einer solchen Anwendung kurz vor dem Einbringen in den Hohlraum durch Mischen der Komponenten hergestellt, wobei die Zusammensetzungen der Komponenten derart gewählt sind, dass die Baustoffmischung nach dem Mischen nach einer kurzen Reaktionszeit innerhalb des Ringraums eine Gel-Konsistenz erlangt, so dass eine ausreichende Anfangsfestigkeit vorliegt und das Füllmaterial nicht ausgehend von einem Schildschwanz einer zum Verlegen der Tübbinge verwendeten Tunnelvortriebsmaschine in Richtung der Abbaukammer der Tunnelvortriebsmaschine fließen kann.

Aus dem Artikel "Mörtel im Tunnelbau - Stand der Technik und aktuelle Entwicklungen zur Verfüllung des Ringspaltes bei Tunnelvortriebsmaschinen" von Professor Dr.-Ing. Markus Thewes und Dipl.-Ing. Christoph Budach, Bauportal 12/2009, S. 706-711 sind verschiedene Verfahren und Materialien zum Verfüllen des Ringspaltes bekannt. Wie dem Artikel zu entnehmen ist, wird üblicherweise ein zementhaltiger Ringspaltmörtel verwendet. Daneben ist auch eine Zwei-Komponenten-Baustoffmischung beschrieben (S. 709, Tabelle 3), wobei die Grundkomponente Wasser, Bentonit, Zement und einen Stabilisator enthält, der das Abbinden des Zements verzögern soll. Der Artikel nennt auch EinKomponenten-Ringspaltmörtel ohne Zement, welche anstelle des Zements Flugasche enthalten. Diese werden auch als inaktive Ringspaltmörtel bezeichnet. Derartige den Ringspalt füllende Mörtel werden verwendet, um das bei einem Stillstand des Systems mögliche Abbinden der Mischung in den Zuführleitungen zu vermeiden.

Bei Flugasche handelt es sich um ein puzzolanes Bindemittel, welches selbstständig nicht abbindet (deshalb "inaktiver Ringspaltmörtel" genannt). Zum Abbinden bedarf es der Zugabe eines Calciumhydroxids. Aus dem Artikel von L. Linger, M. Cayrol und L. Boutillon, "TBM's backfill mortars - Overview - Introduction to Rheological Index" in "Tailor Made Concrete Structures", Taylor & Francis Group, London, 2008, Seiten 271 bis 276, ist ein Füllmörtel bekannt (vgl. Absatz 2.2, Ziffer 4. auf Seite 272), bei dem der puzzolane Effekt bei pulverisierter Flugasche mittels Zugabe von Calciumhydroxid zum Abbinden genutzt wird.

Die vorgenannten Baustoffmischungen sind für eine Vielzahl von unterschiedlichen Baugründen geeignet. Nicht geeignet sind diese Baustoffmischungen aber zum Verfüllen von Hohlräumen, die an Calciumsulfat-Anhydrit-haltige Baugründe grenzen oder von Calciumsulfat-Anhydrit definiert werden. Bei Verwendung der vorgenannten Baustoffmischungen kann das Calciumsulfat-Anhydrit des Baugrundes Wasser aus dem auf Basis der Baustoffmischungen gebildeten Mörtel aufnehmen und aufquellen, was zu einer Volumenzunahme von mehr als 60 % führen kann. Diese Volumenzunahme kann dazu führen, dass der Baugrund aufbricht und weiteres Wasser eindringt, so dass die Quellung, die durch das Wasser des Mörtels in Gang gesetzt wurde, fortschreitet. Ist der lithostatische Druck des Gesteins über dem das Calciumsulfat-Anhydrit enthaltenden Baugrund geringer als der Quelldruck des Anhydrits, kann dieser nicht kompensiert werden und bewirkt eine Hebung der Erdoberfläche.

Es ist Aufgabe der vorliegenden Erfindung, eine Baustoffmischung bereitzustellen, die zum Herstellen eines Mörtels zum Verfüllen eines an einen Calciumsulfat-Anhydrit enthaltenden Baugrund angrenzenden Hohlraums geeignet ist. Es ist ferner Aufgabe der vorliegenden Erfindung, ein Verfahren zum Herstellen eines solches Mörtels sowie ein Verfahren zum Verfüllen eines an einen Calciumsulfat-Anhydrit enthaltenden Baugrund angrenzenden Hohlraums bereitzustellen.

Die erstgenannte Aufgabe wird erfindungsgemäß durch eine Mehr-Komponenten-Baustoffmischung gemäß Anspruch 1 gelöst. Die Mehr-Komponenten-Baustoffmischung zum Herstellen eines Mörtels zum Verfüllen eines an einen Calciumsulfat-Anhydrit enthaltenden Baugrund angrenzenden Hohlraums umfasst eine zementklinker-freie Grundkomponente (GK) mit einem latent-hydraulischen Bindemittel und zumindest einem Zuschlagstoff, eine Aktivatorkomponente (AK) mit zumindest einem alkalischen und/oder sulfatischen Aktivator zum Aktivieren des latent-hydraulischen Bindemittels sowie eine Salzkomponente (SK) zumindest eines Salzes, dessen Anionen mit Calciumkationen ein Löslichkeitsprodukt bilden, das kleiner als 10⁻⁸ ist.

Unter Hohlraum soll hier jedes mit der Baustoffmischung ganz oder teilweise füllbare Volumen verstanden werden, insbesondere ein Spalt zwischen dem Baugrund und einem Bauwerk. Unter Calciumsulfat-Anhydrit enthaltenden Baugrund soll ein an den Hohlraum angrenzender Baugrund verstanden werden, der Calciumsulfat-Anhydrit in einer bei Zutritt von Wasser quellfähigen Form enthält.

Latent-hydraulische Bindemittel besitzen die Eigenschaft, bei einer entsprechenden Anregung (Aktivierung) selbstständig hydraulisch erhärten zu können. Im Unterschied zu Puzzolanen, welche zum Abbinden Calciumhydroxid verbrauchen, benötigen die latent-hydraulischen Bindemittel nur ein alkalisches oder auch sulfatisches Milieu, um abzubinden, das heißt um CSH-Phasen zu bilden.

Bei dem Zuschlagstoff der Grundkomponente kann es sich beispielsweise um Sand, Kies oder eine Mischung daraus handeln, wobei eine Mischung bevorzugt ist, die Sand 0/2 und Kies 2/8 umfasst.

Für die Anregung des latent-hydraulischen Bindemittels der Grundkomponente sorgt die Aktivatorkomponente, die zumindest einen alkalischen und/oder sulfatischen Aktivator umfasst. Ein alkalischer Aktivator im Sinne der vorliegenden Anmeldung ist eine Verbindung, die bei Kontakt mit Wasser Hydroxyl-Ionen freisetzt oder diese umfasst. Ein sulfatischer Aktivator im Sinne der vorliegenden Erfindung ist eine Verbindung, die bei Kontakt mit Wasser Sulfationen freisetzt oder diese umfasst.

Welcher Aktivator genau in welchen Mengen verwendet wird, hängt von der Zusammensetzung der Baustoffmischung und insbesondere von dem verwendeten latent-hydraulischen Bindemittel ab, wobei die Auswahl eines geeigneten Aktivators für einen Fachmann selbstverständlich ist.

Die Zusammensetzung der Grundkomponente, insbesondere der Anteil des latent-hydraulischen Bindemittels, und die Zusammensetzung der Aktivatorkomponente, insbesondere die Art und der Anteil des Aktivators, sind vorteilhafterweise so gewählt, dass ein Mörtel entsteht, der nach einer kurzen Reaktionszeit von weniger als 5 Minuten, vorzugsweise weniger als 3 Minuten, insbesondere von etwa 30-60 Sekunden, eine Gel-Konsistenz erlangt. Anschließend härtet die Baustoffmischung aus.

Erfindungsgemäß umfasst der auf Basis der Mehr-Komponenten-Baustoffmischung hergestellte Mörtel Anionen, die mit Calcium ein Löslichkeitsprodukt bilden, das kleiner als 10⁻⁸ ist.

Wird ein solcher Mörtel in einen Hohlraum verfüllt, der an einen Baugrund mit Calciumsulfat-Anhydrit grenzt (beispielsweise der Ringspalt zwischen Tübbingen und umgebenden Baugrund beim Tunnelbau) geht wie bei bekannten Mörteln zunächst ein kleiner Teil des Calciumsulfat-Anhydrits in Lösung, die Konzentration an Calcium in der Grenzfläche Calciumsulfat-Anhydrit/Mörtelwasser steigt. Sobald ein durch das Anion des Salzes vorgegebenes Löslichkeitsprodukt Calcium/Anion überschritten ist, entsteht eine feste Calcium-Anion-Verbindung. Diese fällt aber nicht im üblichen chemischen Sinne aus der "Lösung" (dem Mörtelwasser) aus, sondern lagert sich an dem Calciumsulfat-Anhydrit des Baugrundes ab und verhindert so, dass weiteres Calciumsulfat in Lösung geht, indem ein Kontakt zwischen dem Calciumsulfat-Anhydrit und dem Mörtelwasser vermieden wird.

Alternativ kann man sich diesen Vorgang derart vorstellen, dass Wasser in die äußere Schicht des Calciumsulfat-Anhydrits eindringt, eine geringfügige Quellung entsteht, diese aber nicht fortfährt, da in dieser dünnen Quellschicht sofort die unlösliche Calcium/Anion-Verbindung entsteht, die das Lösen/Quellen von weiterem Calciumsulfat verhindert.

Die Salzkomponente bedingt also zwei Effekte, die wirksam das Aufquellen des Calciumsulfat-Anhydrits vermeiden.

Effekt 1: Da das Löslichkeitsprodukt der Verbindung Calcium/Anion geringer als das von Calciumsulfat ist, geht deutlich weniger Calcium in Lösung als dies bei einem Mörtelwasser der Fall wäre, welches kein solches Anion umfasst (in diesem Fall ist die Löslichkeit des Calciums durch das Löslichkeitsprodukt von Calciumsulfat vorgegeben).

Effekt 2: Das in Lösung gehende Calcium lagert sich als Calcium/Anion-Verbindung auf dem Calciumsulfat-Anhydrit des Baugrundes ab und verhindert einen Kontakt zwischen dem Calciumsulfat-Anhydrit und dem Mörtelwasser, so dass kein weiteres Calciumsulfat-Anhydrit in Lösung geht bzw. aufquillt. Die Calcium/Anion-Verbindung bewirkt eine gewisse "Passivierung" des Calciumsulfat-Anhydrits der Grenzschicht Calciumsulfat-Anhydrit/Mörtel.

In der Summe bewirken die beiden Effekte, dass eine Quellung des Calciumsulfat-Anhydrits des Baugrundes wirkungsvoll vermieden wird, es entsteht kein Quelldruck, der sich negativ auf ein Bauwerk, welches an einen verfüllten Hohlraum angrenzt, auswirken könnte oder eine Hebung des übergelagerten Gesteins bewirken könnte.

Die Menge der Salzkomponente bzw. des zumindest einen Salzes der Salzkomponente ist von dem zu verfüllenden Hohlraum und dem Salz selber abhängig. Wenn ein Hohlraum mit großer Oberfläche verfüllt werden soll und der Baugrund vollständig aus Calciumsulfat-Anhydrit besteht, sind größere Mengen einzusetzen als bei einem Baugrund, in dem lediglich stellenweise Inseln aus Calciumsulfat-Anhydrit vorkommen. Die Feststellung der zumindest erforderlichen Menge ist für einen Fachmann bei Kenntnis des Baugrundes trivial.

Die Salzkomponente kann eine separate Komponente sein, die bei Herstellung des Mörtels beigegeben wird, es ist jedoch bevorzugt, dass die Salzkomponente Teil der Grundkomponente ist. Eine entsprechende Baustoffmischung ist einfacher und kostengünstiger zu handhaben.

Bei einer bevorzugten Ausführungsform der erfindungsgemäßen Mehr-Komponenten-Baustoffmischung ist das latent-hydraulische Bindemittel gemahlener Hüttensand. Dieser ist nicht nur preiswert; sein Abbindevermögen kann außerdem nicht nur alkalisch, sondern auch sulfatisch aktiviert werden.

Sofern ein alkalischer Aktivator verwendet wird, ist es bevorzugt, dass ein Erdalkalioxid und/oder Erdalkalihydroxid, vorzugsweise Calciumoxid und/oder Calciumhydroxid, verwendet wird. Bei einer anderen Ausführungsform ist der zum Aktivieren des latent-hydraulischen gemahlenen Hüttensands verwendete Aktivator ein Alkali-Wasserglas, beispielsweise Natrium- oder Kaliumwasserglas. Dieses ist vorteilhafterweise hoch alkalisch und enthält auch Siliciumdioxid, welches mit dem Hüttensand reagieren kann.

Bei einer alternativen bevorzugten Ausführungsform umfasst die Aktivatorkomponente ein alkalisches Phosphat, vorzugsweise Tetrakalium- und/oder Tetranatriumpyrophosphat. Dies hat den Vorteil, dass die Aktivatorkomponente zusätzliche Anionen bereitstellt, die mit Calcium eine schwerlösliche Verbindung bilden.

Bei einer Ausführungsform ist das Hüttensandmehl sulfatisch anregbar. Dies ist üblicherweise dann der Fall, wenn der verwendete Hüttensand hochbasisch ist und einen hohen Anteil an Aluminiumoxid aufweist. Diese Ausführungsform der Baustoffmischung eignet sich für das Verfüllen eines Hohlraums, der an einen Baugrund mit Calciumsulfat-Anhydrit angrenzt, besonders, da das zusätzliche Sulfat das Auflösen / Quellen von Calciumsulfat-Anhydrit vermindert. In diesem Sinne ist es besonders bevorzugt, wenn der sulfatische Aktivator Calciumsulfat (Gips) umfasst.

Die genaue Auswahl des zumindest einen Salzes der Salzkomponente ist abhängig von der Zusammensetzung der Mehr-Komponenten-Baustoffmischung. Wesentlich ist, dass das Löslichkeitsprodukt der Verbindung Calcium/Anion kleiner 10⁻⁸ ist. Bei einer bevorzugten Ausführungsform ist bevorzugt, dass die Anionen des zumindest einen Salzes ausgewählt sind aus einer Gruppe umfassend Oxalat und Phosphat oder eine Mischung daraus. Unter Phosphat sollen hier sowohl Mono- als auch Diphosphate und Hydrogenphosphate umfasst sein, sofern die Löslichkeitsprodukte der Calciumsalze den vorgenannten Anforderungen entsprechen. Salze der vorgenannten Anionen sind preiswert und deren Auswirkung auf die Umwelt gut erforscht.

Bei einer anderen Ausführungsform enthält die Grundkomponente außerdem Flugasche und/oder Silicastaub. In Abhängigkeit von der Zusammensetzung der Flugasche kann diese teilweise als latent-hydraulisches Bindemittel, teilweise als puzzolaner Stoff wirken. Silicastaub kann ebenfalls als puzzolaner Stoff eingesetzt werden. In Abhängigkeit von der genauen Beschaffenheit der Flugasche und/oder des Silicastaubes muss bei Zumischung dieser Bestandteile zu der Grundkomponente der Anteil und die Zusammensetzung der Aktivatorkomponente entsprechend angepasst werden. Durch die Zumischung der hier genannten optionalen Stoffe können die Eigenschaften der Baustoffmischung an die Einsatzbedingungen angepasst werden.

Zur weiteren Anpassung der erfinderischen Baustoffmischung an die Einsatzbedingungen kann es bei einer bevorzugten Ausführungsform vorgesehen sein, dass die Grundkomponente zumindest ein Acrylat als Verflüssiger und/oder einen Entschäumer umfasst.

Die erfindungsgemäße Baustoffmischung kann in Abhängigkeit von ihren genauen Komponenten als Trockenmischung vorliegen. Die Komponenten werden dann vor Ort kurz vor der Verarbeitung mit entsprechenden Mengen Wasser angemacht. In Abhängigkeit von dem Einsatzort kann es aber von Vorteil sein, dass die Grundkomponente Wasser, zumindest einen Zuschlagstoff und das latent-hydraulische Bindemittel umfasst, wobei der Anteil des latent-hydraulischen Bindemittels 5 - 30 Gew.-%, vorzugsweise 10 - 20 Gew.-% ist. Eine solche Grundkomponente ist für bis zu 24h gut verarbeit- und pumpbar, der Aufwand des Anmachens vor Ort entfällt. Bei einer bevorzugten Ausführungsform enthält die Grundkomponente das Salz in einem Anteil von 0,2 - 5 Gew.-%.

Der Anteil des zumindest einen Zuschlagstoff an der Grundkomponente beträgt bei einer bevorzugten Ausführungsform 40 - 80 Gew.-%. Bei einer weiteren bevorzugten Ausführungsform umfasst die Grundkomponente Flugasche in einem Anteil von 10 - 30 Gew.-%.

Erfindungsgemäß wird der Mörtel zum Verfüllen eines an einen Calciumsulfat-Anhydrit enthaltenden Baugrund angrenzenden Hohlraums hergestellt, indem eine zementklinker-freie Grundkomponente mit einem latent-hydraulischen Bindemittel und zumindest einem Zuschlagstoff mit Wasser angemacht wird, eine Aktivatorkomponente mit einem alkalischen Aktivator in Wasser gelöst oder aufgeschlämmt wird und mit der Grundkomponente in Kontakt gebracht wird, und ein Salz in Wasser gelöst oder aufgeschlämmt wird und mit der Grundkomponente gemischt wird. Erfindungsgemäß enthält die Grundkomponente und/oder die Aktivatorkomponente ein Salz, dessen Anionen mit Calciumkationen ein Löslichkeitsprodukt bilden, das kleiner als 10⁻⁸ ist.

Es ist bevorzugt, dass das Salz Bestandteil der Grundkomponente ist, es kann jedoch auch Bestandteil beider Komponenten sein.

Erfindungsgemäß wird ein an einen Calciumsulfat-Anhydrit enthaltenden Baugrund angrenzender Hohlraum verfüllt, indem eine zementklinker-freie Grundkomponente mit einem latent-hydraulischen Bindemittel und zumindest einem Zuschlagstoff mit Wasser angemacht wird, eine Aktivatorkomponente zum Aktivieren des latent-hydraulischen Bindemittels mit einem alkalischen und/oder sulfatischen Aktivator in Wasser gelöst oder aufgeschlämmt wird, und die beiden Komponenten gemischt und in den Hohlraum verfüllt werden. Erfindungsgemäß enthält die Grundkomponente und/oder die Aktivatorkomponente ein Salz, dessen Anionen mit Calciumkationen ein Löslichkeitsprodukt bilden, das kleiner als 10⁻⁸ ist.

Im Hinblick auf die einzelnen Bestandteile der vorstehend beschriebenen Verfahren gelten die weiter oben dargelegten Ausführungen zu der Mehr-Komponenten-Baustoffmischung entsprechend.

Die Erfindung betrifft ferner einen Mörtel, erhältlich nach dem oben beschriebenen Verfahren. Dieser zementklinker-freie Mörtel zum Verfüllen eines an einen Calciumsulfat-Anhydrit enthaltenden Baugrund angrenzenden Hohlraums umfasst die erfindungsgemäße Baustoffmischung sowie ggf. Wasser. Die Erfindung betrifft ebenso die Verwendung der oben beschriebenen Mehr-Komponenten-Baustoffmischung zum Herstellen eines Mörtels zum Verfüllen eines an einen Calciumsulfat-Anhydrit enthaltenden Baugrund angrenzenden Hohlraums, insbesondere eines Ringspalts eines Tunnelbauwerks.

### Beispiele

Im nachfolgenden wird die Erfindung anhand bevorzugter Ausführungsbeispiele näher beschrieben.

Die nachfolgende Tabelle zeigt die Zusammensetzung von drei Mörteln M1, M2, M3 auf der Basis der erfindungsgemäßen Baustoffmischung. Alle Angaben in der Tabelle beziehen sich auf kg/m³.

**Tabelle 1: Zusammensetzungen verschiedener Mörtel auf Basis der erfindungsgemäßen Baustoffmischung**

| Zusammensetzung Mörtel auf Basis der erfindungsgemäßen Baustoffmischung | M1 | M2 |
|---|---|---|
| Wasser | 220,00 | 220,00 |
| Sand 0/2 (Zuschlagstoff 1) | 856,00 | 856,00 |
| Kies 2/8 (Zuschlagstoff 2) | 538,00 | 538,00 |
| Hüttensandmehl (Bindemittel) | 200,00 | 200,00 |
| Flugasche (Füllstoff) | 365,00 | 365,00 |
| K₂HPO₄ (27,6 Gew.-%, 72, 4 Gew.-% Wasser) (Salzkomponente) | 13,00 | 13,00 |
| Fließmittel Acrylat 722 + 0,5 Marlowet Entschäumer | 2,26 | |
| Fließmittel Acrylat PJ 2002 + 0,5 Realis Defoamer | | 2,26 |
| Aktivator Betol 72% (Wasserglas) | 86, 00 | 86, 00 |

Die Mörtel auf Basis der erfindungsgemäßen Baustoffmischung wurden hergestellt, indem eine Grundkomponente mit den angegeben Mengen Sand 0/2, Kies 2/8, Hüttensandmehl, Flugasche, Salzlösung (K2HPO4 (27,6 Gew.-%, 72, 4 Gew.-% Wasser)) und Fließmittel mit der angegebenen Menge Wasser angemacht wurde. Dazu wurden die Feststoffe so lange trocken gemischt bis eine homogene Trockenmischung entstand. Diese wurde dann mit der angegebenen Menge Wasser versetzt, welches zuvor mit dem Fließmittel und dem Aktivator versetzt wurde. Diese Mischung wird wieder so lange gerührt bis eine homogene Mischung entsteht.

Das so erhaltene "Bereitstellungsgemisch" verfügt über eine gute Pumpbarkeit und ist über einen Zeitraum von 24h gut verarbeitbar.

Für Mörtel auf der Basis der erfindungsgemäßen Baustoffmischung sind drei Systemphasen zu beachten.

### 1. Verarbeitungsphase

In dieser Phase wird das Bereitstellungsgemisch hergestellt. Anhand des Bereitstellungsgemisches werden die Frischmörteleigenschaften ermittelt.

### Konsistenzprüfung nach DIN EN 12350

Eine wesentliche Frischmörteleigenschaft ist die Konsistenz. Die Konsistenz beschreibt in der Betontechnologie übergeordnet die Verarbeitbarkeit, die Verdichtbarkeit, die Förderbarkeit und die Einbaubarkeit. Der Frischbeton bzw. Frischmörtel kann mit verschiedenen Prüfverfahren Konsistenzklassen zugeordnet werden.

Um die Frischmörteleigenschaften bestimmen zu können wird nach dem oben genannten Verfahren ein Bereitstellungsgemisch BM1 für Mörtel M1 hergestellt.

Auf der Basis von BM1 wird das Setzfließmaß über 7h sowie das Ausbreitmaß nach 24h ermittelt.

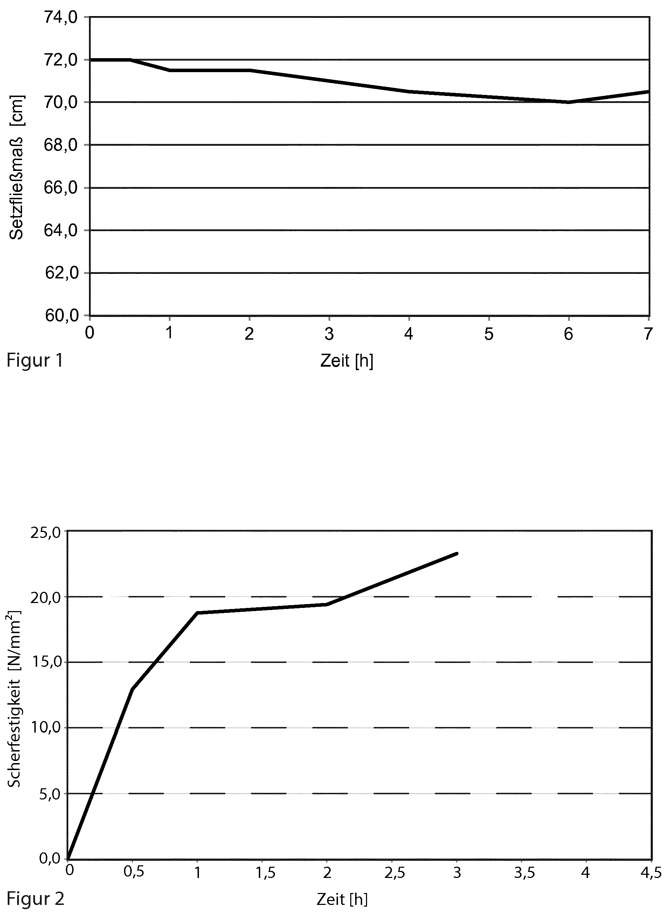

Die Untersuchungen ergeben, dass das Ausbreitmaß nach 24h 62 cm beträgt und die Konsistenzhaltung bis 7h nahezu konstant ist (siehe dazu Figur 1).

### 2. Gelphase

Die Gelphase wird durch Zugabe der Aktivatorkomponente eingeleitet. Zu Testzwecken wird die Aktivatorkomponente dem Bereitstellungsgemisch BM1 zugegeben.

Wird das erfindungsgemäße Verfahren zum Verfüllen eines Hohlraums durchgeführt, und handelt es sich bei diesem Hohlraum beispielsweise um einen Ringspalt zwischen von einer Tunnelvortriebmaschine gesetzten Tübbingen und einem Calciumsulfat-Anhydrit-haltigen Baugrund, wird die Aktivatorkomponente über eine Ringspaltlisene zugegeben.

Nach Einleitung der Gelphase kann nach ca. 60 - 90 Sek. Ein Konsistenzverlust festgestellt werden. Der aktivierte Mörtel bleibt aber plastisch verformbar.

### Bestimmung der Erstarrungszeit nach DIN EN 196

Die entsprechend DIN EN 196 durchgeführte Bestimmung der Erstarrungszeit ergab einen Erstarrungsbeginn nach 90 Min.

### Flügelscherversuche nach DIN 4094

Die Flügelschwerversuche nach DIN 4094 wurden unmittelbar nach Zugabe der Aktivatorkomponente durchgeführt. Dabei wurde ein Erstarrungsende bei 80 Nm ermittelt. Dies entspricht 51 N/mm² nach 6h (siehe dazu Figur 2).

Der aktivierte Mörtel ist plastisch verformbar, was die Auftriebsgefahr verringert und gute Bettungseigenschaften bedingt.

### 3. Erhärtungsphase

Zur Charakterisierung der Erhärtungsphase wird die Druckfestigkeit zu verschiedenen Zeitpunkten nach Aktivierung ermittelt.

### Druckfestigkeit nach DIN EN 12390

Die Druckfestigkeit des aktivierten Mörtels wurde 1d, 7d und 28d nach Aktivierung des Bereitstellungsgemisches mit der Aktivatorkomponente ermittelt:

**Tabelle 2: Druckfestigkeit aktivierter Mörtel M1**

| nach X Tagen | Druckfestigkeit |
|---|---|
| 1 | 0, 3 N/mm² |
| 7 | 3,1 N/mm² |
| 28 | 11,0 N/mm² |

Wie man anhand der Messergebnisse erkennt, sind Mörtel auf der Basis der erfindungsgemäßen Baustoffmischung geeignet, zum Verfüllen von Hohlräumen zwischen zum Beispiel Tübbingen und Baugrund verwendet zu werden.

## Patentansprüche

1. Eine Mehr-Komponenten-Baustoffmischung zum Herstellen eines Mörtels zum Verfüllen eines an einen Calciumsulfat-Anhydrit enthaltenden Baugrund angrenzenden Hohlraums, umfassend
eine zementklinker-freie Grundkomponente (GK) mit
- einem latent-hydraulischen Bindemittel und
- zumindest einem Zuschlagstoff, und
eine Aktivatorkomponente (AK) mit
- zumindest einem alkalischen und/oder sulfatischen Aktivator zum Aktivieren des latent-hydraulischen Bindemittels, und
eine Salzkomponente (SK) zumindest eines Salzes, dessen Anionen mit Calciumkationen ein Löslichkeitsprodukt bilden, das kleiner als 10⁻⁸ ist.

2. Die Mehr-Komponenten-Baustoffmischung zum Herstellen eines Mörtels zum Verfüllen eines an einen Calciumsulfat-Anhydrit enthaltenden Baugrund angrenzenden Hohlraums nach Anspruch 1,
**dadurch gekennzeichnet, dass** die Salzkomponente (SK) in der Grundkomponente (GK) enthalten ist.

3. Die Mehr-Komponenten-Baustoffmischung zum Herstellen eines Mörtels zum Verfüllen eines an einen Calciumsulfat-Anhydrit enthaltenden Baugrund angrenzenden Hohlraums nach Anspruch 1 oder 2,
**dadurch gekennzeichnet, dass** das latent-hydraulische Bindemittel gemahlener Hüttensand, vorzugsweise sulfatisch anregbarer Hüttensand ist.

4. Die Mehr-Komponenten-Baustoffmischung zum Herstellen eines Mörtels zum Verfüllen eines an einen Calciumsulfat-Anhydrit enthaltenden Baugrund angrenzenden Hohlraums nach einem der Ansprüche 1 - 3,
**dadurch gekennzeichnet, dass** die Anionen der Salzkomponente (SK) ausgewählt sind aus einer Gruppe umfassend Oxalat und Phosphat.

5. Die Mehr-Komponenten-Baustoffmischung zum Herstellen eines Mörtels zum Verfüllen eines an einen Calciumsulfat-Anhydrit enthaltenden Baugrund angrenzenden Hohlraums nach einem der Ansprüche 1 - 4, **dadurch gekennzeichnet, dass** die Aktivatorkomponente ein alkalisches Phosphat, vorzugsweise Tetrakalium- und/oder Tetranatriumpyrophosphat, enthält.

6. Die Mehr-Komponenten-Baustoffmischung zum Herstellen eines Mörtels zum Verfüllen eines an einen Calciumsulfat-Anhydrit enthaltenden Baugrund angrenzenden Hohlraums nach einem der Ansprüche 1 - 5,
**dadurch gekennzeichnet, dass** die Grundkomponente (GK) Flugasche und/oder Silicastaub umfasst.

7. Die Mehr-Komponenten-Baustoffmischung zum Herstellen eines Mörtels zum Verfüllen eines an einen Calciumsulfat-Anhydrit enthaltenden Baugrund angrenzenden Hohlraums nach Anspruch 1, **dadurch gekennzeichnet, dass** die Grundkomponente (GK) Wasser, zumindest einen Zuschlagstoff und das latent-hydraulische Bindemittel umfasst, wobei der Anteil des latent-hydraulischen Bindemittels 5 - 30 Gew.-%, vorzugsweise 10 - 20 Gew.-% ist

8. Die Mehr-Komponenten-Baustoffmischung zum Herstellen eines Mörtels zum Verfüllen eines an einen Calciumsulfat-Anhydrit enthaltenden Baugrund angrenzenden Hohlraums nach Anspruch 7, **dadurch gekennzeichnet, dass** die Grundkomponente das Salz in einem Anteil von 0,2 - 5 Gew.-% enthält.

9. Die Mehr-Komponenten-Baustoffmischung zum Herstellen eines Mörtels zum Verfüllen eines an einen Calciumsulfat-Anhydrit enthaltenden Baugrund angrenzenden Hohlraums nach Anspruch 7 oder 8, **dadurch gekennzeichnet, dass** der Anteil des zumindest einen Zuschlagstoffs an der Grundkomponente 40 - 80 Gew.-% ist.

10. Die Mehr-Komponenten-Baustoffmischung zum Herstellen eines Mörtels zum Verfüllen eines an einen Calciumsulfat-Anhydrit enthaltenden Baugrund angrenzenden Hohlraums nach einem der Ansprüche 7 - 9, **dadurch gekennzeichnet, dass** die Grundkomponente Flugasche in 10 - 30 Gew.-% enthält.

11. Verfahren zum Herstellen eines Mörtels zum Verfüllen eines an einen Calciumsulfat-Anhydrit enthaltenden Baugrund angrenzenden Hohlraums, wobei
eine zementklinker-freie Grundkomponente mit einem latent-hydraulischen Bindemittel und zumindest einem Zuschlagstoff mit Wasser angemacht wird,
eine Aktivatorkomponente mit einem alkalischen Aktivator zum Aktivieren des latent-hydraulischen Bindemittels in Wasser gelöst oder aufgeschlämmt wird und mit der Grundkomponente gemischt wird,
**dadurch gekennzeichnet, dass** die Grundkomponente und/oder die Aktivatorkomponente ein Salz enthält, dessen Anionen mit Calciumkationen ein Löslichkeitsprodukt bilden, das kleiner als 10⁻⁸ ist.

12. Verfahren zum Verfüllen eines an einen Calciumsulfat-Anhydrit enthaltenden Baugrund angrenzenden Hohlraums, wobei
eine zementklinker-freie Grundkomponente mit einem latent-hydraulischen Bindemittel und zumindest einem Zuschlagstoff mit Wasser angemacht wird,
eine Aktivatorkomponente zum Aktivieren des latent-hydraulischen Bindemittels mit einem alkalischen Aktivator in Wasser gelöst oder aufgeschlämmt wird,
die beiden Komponenten gemischt und in den Hohlraum verfüllt werden,
**dadurch gekennzeichnet, dass** die Grundkomponente und/oder die Aktivatorkomponente ein Salz enthält, dessen Anionen mit Calciumkationen ein Löslichkeitsprodukt bilden, das kleiner als 10⁻⁸ ist.

13. Zementklinker-freier Mörtel umfassend die Baustoffmischung nach einem der Ansprüche 1 - 6 sowie Wasser.

14. Verwendung einer Mehr-Komponenten-Baustoffmischung nach einem der Ansprüche 1 - 10 zum Herstellen eines Mörtels zum Verfüllen eines an einen Calciumsulfat-Anhydrit enthaltenden Baugrund angrenzenden Hohlraums.

15. Verwendung einer Mehr-Komponenten-Baustoffmischung nach Anspruch 14, **dadurch gekennzeichnet, dass** der Hohlraum ein Ringspalt eines Tunnelbauwerks ist.
